# FASCICULE DE BREVET EUROPEEN

(11) **EP 1 722 429 B1**
(45) Date de publication et mention de la délivrance du brevet: **18.04.2018**
(21) Numéro de dépôt: 06290694.6
(22) Date de dépôt: 02.05.2006
(51) Int. Cl.: C01B 33/02, H01M 4/38, H01M 4/58, H01M 10/052

(54) **Matériau nanocomposite pour anode d'accumulateur au lithium**
Nanoverbundstoff-Material als Anode einer Lithium-Sekundärbatterie
Nanocomposite material for anode of lithium secondary battery

(30) Priorité: 13.05.2005 FR 0504828
(43) Date de publication de la demande: 15.11.2006
(73) Titulaire: SAFT, 93170 Bagnolet (FR)
(72) Inventeur: Péres, Jean-Paul, 33320 Eysines (FR); Gillot, Stéphane, 33440 Ambares (FR); Saint, Juliette, 37530 Nazelles-Negron (FR); Morcrette, Mathieu, 80000 Amiens (FR); Larcher, Dominique, 80000 Amiens (FR); Tarascon, Jean-Marie, 91540 Mennecy (FR); Roca I Cabarrocas, Pere, 91140 Villebon sur Yvette (FR)
(74) Mandataire: Hirsch & Associés

(56) Documents cités:
- YANG J ET AL: "Si/C composites for high capacity lithium storage materials", ELECTROCHEMICAL AND SOLID-STATE LETTERS ELECTROCHEM. SOC USA, vol. 6, no. 8, août 2003 (2003-08), pages A154-A156, XP001172416, ISSN: 1099-0062
- DATABASE CA [Online] CHEMICAL ABSTRACTS SERVICE, COLUMBUS, OHIO, US; 18 décembre 2003 (2003-12-18), WANG, BAO-FENG ET AL: "Si/C composite negative electrode material for lithium-ion batteries", XP002373557, extrait de STN Database accession no. 139:397906 & HUAXUE XUEBAO , 61(10), 1572-1576 CODEN: HHHPA4; ISSN: 0567-7351, 2003,
- LIU Y ET AL: "Silicon/carbon composites as anode materials for li-ion batteries", ELECTROCHEMICAL AND SOLID-STATE LETTERS 2004 ELECTROCHEMICAL SOCIETY INC. US, vol. 7, no. 10, 2004, pages A369-A372, XP002661797, DOI: DOI:10.1149/1.1795031
- ZHANG X-W ET AL: "Electrochemical performance of lithium ion battery, nano-silicon-based, disordered carbon composite anodes with different microstructures", JOURNAL OF POWER SOURCES, ELSEVIER, AMSTERDAM, NL, vol. 125, no. 2, 14 janvier 2004 (2004-01-14), pages 206-213, XP004484046, ISSN: 0378-7753

## Description

### DOMAINE TECHNIQUE

L'invention a pour objet un matériau nanocomposite de silicium-carbone pour anode d'accumulateur au lithium. Ce matériau présente une capacité et une stabilité en cyclage élevées par rapport aux matériaux d'anode connus dans l'état de l'art des accumulateurs au lithium. L'invention a également pour objet un procédé de fabrication du matériau nanocomposite et un accumulateur dont l'anode comprend ce matériau nanocomposite.

### ETAT DE LA TECHNIQUE

L'évolution des applications électroniques portables nécessite l'utilisation d'accumulateurs offrant une capacité énergétique de plus en plus élevée.

L'accumulateur lithium-ion actuel, comprenant une anode à base de carbone et une cathode à base de LiNiO₂ dopé, de LiCoO₂ de LiMnO₂ ou de LiMn₂O₄ dopé, possède des énergies massique et volumique limitées. Les énergies massique et volumique des accumulateurs Li-ion actuellement disponibles sur le marché évoluent entre 160 et 200 Wh/kg et entre 430 et 500 Wh/l respectivement, en fonction des technologies d'électrodes et de boîtiers.

L'énergie délivrée par un accumulateur au lithium est en outre limitée par l'anode à base de carbone, qui a certes une longue durée de vie, mais une capacité réversible limitée à environ 300-350 mAh/g. (La capacité réversible est définie comme étant la quantité d'électricité générée au cours de la décharge par la désinsertion réversible des atomes de lithium hors du carbone).

Pour répondre à ces besoins énergétiques croissants, des recherches sont menées sur de nouveaux matériaux d'anode présentant une capacité supérieure à celle du carbone. Les composés intermétalliques, le silicium pur et l'étain pur en font partie. Ceux-ci présentent une capacité massique théorique élevée (de 500 à 4000 mAh/g), mais une tenue en cyclage mauvaise voire catastrophique, notamment en raison de très fortes variations volumiques provoquées par les cycles d'insertion/ désinsertion du lithium dans ces composés. Le silicium comme matériau anodique possède une capacité massique très élevée, allant de 2000 à 4000 mAh/g, mais ne présente pas une bonne stabilité en cyclage. L'homme du métier est donc réduit à utiliser soit du carbone, présentant une capacité massique faible, soit de nouveaux matériaux insuffisamment stables en cyclage.

L'étude de l'art antérieur indique que plusieurs travaux se sont orientés vers la recherche de composites Si-C stables ou pseudo-stables en cyclage et présentant des capacités massiques de 500 à 900 mAh/g. Un composite est défini comme un matériau formé de plusieurs constituants, dont une matière plastique, pour obtenir des propriétés mécaniques particulières.

Le document US 5,624,606 décrit un procédé de formation d'un composé de type Si_{y}C_{1-y} par dépôt chimique en phase vapeur à partir de benzène et d'un gaz contenant des atomes de silicium SiCl₄ ou Si(CH₃)₂Cl₂.

Le document US 5,587,256 décrit un procédé de formation d'un composé de type Si_{y}C_{1-y}O_{z}Hₙ obtenu par pyrolyse d'un polymère précurseur choisi parmi les composés de la famille des siloxanes.

Le document US 5,698,340 décrit un procédé de formation d'un composé de type Si_{y}C_{i-y}O_{z} obtenu par pyrolyse d'un mélange d'un propyltrimethoxysilane, de résine novolac époxy et d'un durcisseur (acide 4-aminobenzoïque ou hexamethylene-diamine).

Les procédés décrits dans ces 3 derniers documents permettent d'obtenir un composite avec des particules nanométriques de silicium. Cependant la synthèse du composite s'accompagne de la formation de carbure de silicium SiC, néfaste aux performances électrochimiques et les performances électrochimiques des composites Si-C ainsi synthétisés sont insuffisantes par rapport aux objectifs de capacités recherchés.

Les documents EP-A-0 903 797 et EP-A-1 102 339 décrivent des procédés de préparation de matière active anodique pour accumulateur au lithium. Ces procédés comprennent le broyage de silicium jusqu'à l'obtention de silicium micrométrique, le mélange de la poudre de silicium avec un composé carboné et une pyrolyse du mélange. La capacité réversible du composite ainsi obtenu reste nettement inférieure à 1000 mAh/g et la tenue en cyclage est insuffisante.

Le document EP-A-1 205 989 décrit un procédé de préparation d'un mélange de particules de carbone et de silicium obtenu par broyage et compactage de carbone et de silicium à l'aide d'un moulin à billes. La taille des particules de silicium est de 50 nm à 290 nm. Des particules de carbone sont ensuite déposées par dépôt chimique en phase vapeur sur le mélange. L'inconvénient majeur de cette technique est sa complexité. Les capacités réversibles obtenues sont inférieures à 1000 mAh/g.

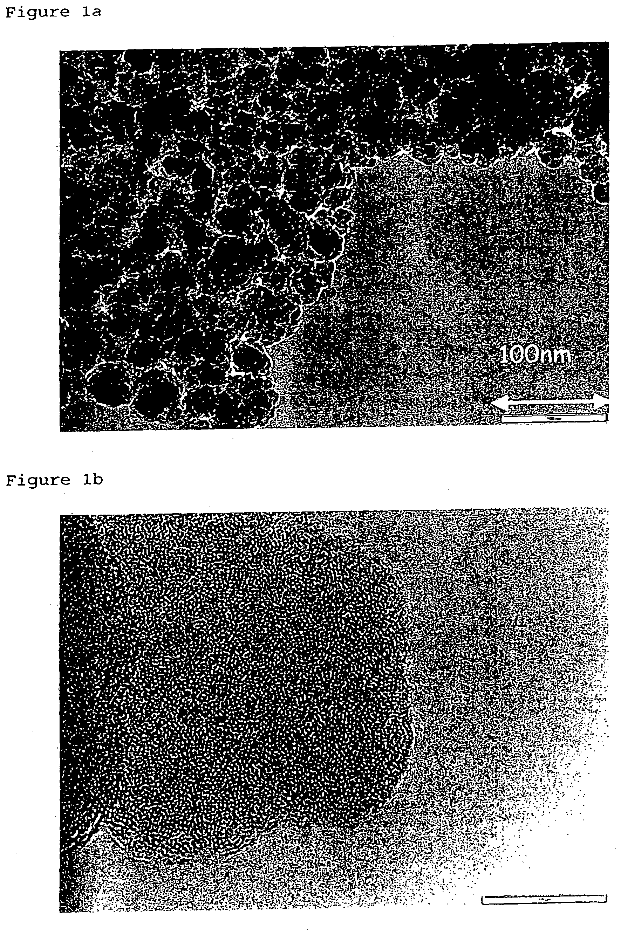

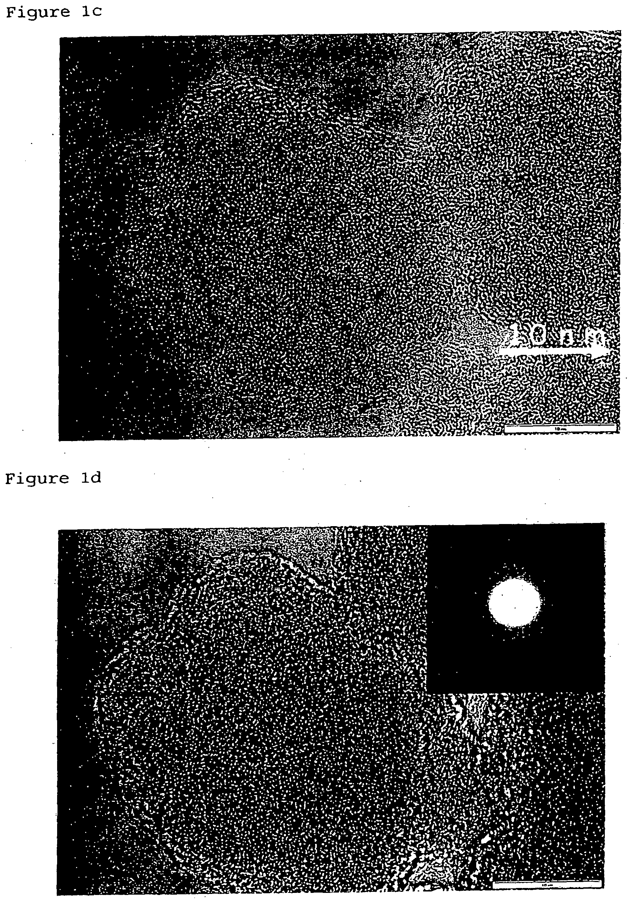

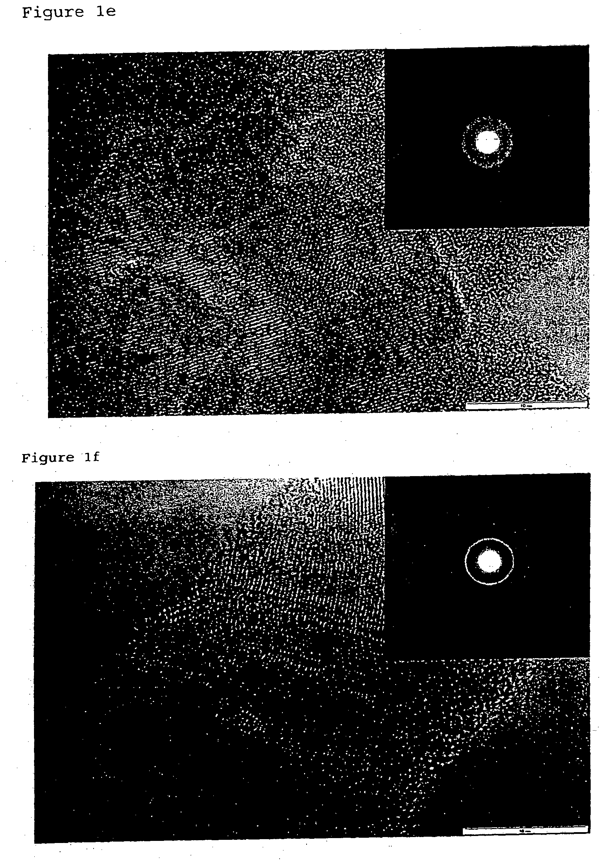

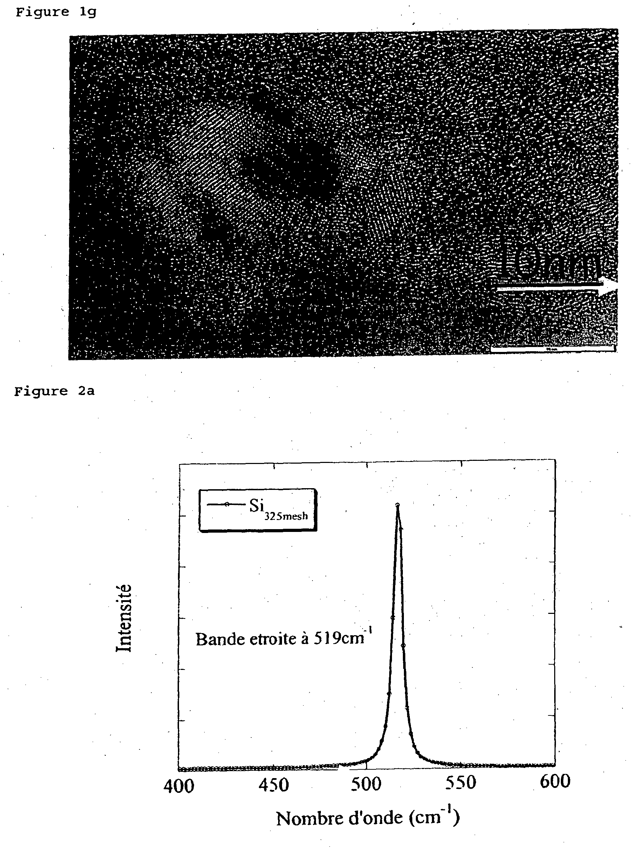

L'abrégé de la publication n°5 du congrès IMLB-Nara-Japon de juin 2004 décrit un matériau composite Si-C comprenant des particules de silicium dont la taille est comprise entre 100 nm et 1 µm. Le choix de cette plage de tailles permet de minimiser les variations de volume des particules de silicium dans des conditions de cyclage. La Figure 1 donne une indication de la capacité massique de ce matériau composite au cours d'un cyclage d'une dizaine de cycles. Celle-ci est inférieure à 1000 mAh/g.

L'abrégé de la publication n°78 du congrès IMLB-Nara-Japon de juin 2004 décrit un matériau nanocomposite Si-C préparé par moulin à billes (bail mill). La capacité massique de ce matériau mesurée au cours du premier cycle est d'environ 1020 mAh/g. Elle chute rapidement car elle n'est plus que d'environ 680 mAh/g au deuxième cycle.

L'abrégé de la publication n°79 du congrès IMLB-Nara-Japon de juin 2004 décrit un nanocomposite Si-C obtenu par pyrolyse d'un mélange de polychlorure de vinyle et d'une poudre composite de graphite et de silicium au préalablement broyée par un moulin à billes. Le procédé de broyage par moulin à billes ne permet pas d'obtenir une capacité supérieure à 1000 mAh/g.

L'abrégé de la publication n°83 du congrès IMLB-Nara-Japon de juin 2004 décrit le dépôt de carbone à la surface de particules de silicium par une méthode de dépôt de couche par précipitation de vapeurs métalliques ou par pyrolyse d'un mélange de polychlorure de vinyle, de graphite et de silicium. La capacité réversible obtenue est de 1000 mAh/g, ce qui est insuffisant.

La publication intitulée « Si/C composites for high capacity lithium storage materials » publiée dans la revue Electrochemical and Solid-State Letters, 6 (8) A154-A156 (2003) décrit un matériau anodique pour accumulateur au lithium. Ce matériau est un composite Si-C. Il est obtenu par pyrolyse à 900°C d'un mélange comprenant du polychlorure de vinyle, du silicium nanométrique et des fines particules de graphite. Le polychlorure de vinyle peut être dissous dans de l'oxyde de propylène.

On recherche donc un matériau anodique de type composite silicium-carbone pour accumulateur au lithium, présentant une capacité massique réversible nettement plus élevée que celle du carbone et des autres matériaux anodiques alternatifs (Si-C micrométrique, composés intermétalliques, phosphures) et une bonne stabilité en cyclage.

### RESUME DE L'INVENTION

A cet effet, l'invention propose un matériau anodique de type composite silicium-carbone, pour accumulateur au lithium, obtenu par un procédé de préparation novateur. Ce procédé permet de fabriquer un matériau composite de silicium-carbone comprenant des particules de silicium dont la taille est inférieure à 100 nm, et que l'on désignera par la suite par le terme de particules nanométriques.

Ce procédé de fabrication comprend les étapes consistant à :
a) fournir une poudre de silicium amorphe obtenue par la technique de dépôt chimique en phase vapeur assisté par plasma (PECVD), ou par laser CO₂, la taille des particules de silicium étant inférieure à 100 nm ;
b) mélanger la poudre de silicium à un polymère carboné ; et
c) effectuer la pyrolyse du mélange, au cours de laquelle la recristallisation du silicium est incomplète et le silicium dans le nanocomposite obtenu est polymorphe.

L'invention propose également un accumulateur au lithium comprenant au moins une anode dont la matière active comprend un matériau nanocomposite produit par le procédé de l'invention.

Les capacités massiques mesurées au cours de la décharge d'un tel accumulateur sont en général d'au moins 1200 mAh/g, à 25°C pour une décharge à un courant inférieur ou égal à C, et sont stables dans des conditions de cyclage de l'accumulateur.

### BREVE DESCRIPTION DES FIGURES

Les figures la, 1b et 1c représentent une photographie par microscopie électronique à transmission haute résolution d'une poudre de silicium nanométrique obtenue par le procédé de l'invention à différents grossissements.
Les figures 1d, le et 1f représentent les clichés de microscopie électronique à transmission haute résolution correspondant respectivement à des échantillons de silicium nanométrique, amorphe (selon l'invention), polymorphe (hors invention) et cristallisé (hors invention).
La figure 1g représente une photographie par microscopie électronique à transmission d'un nanocomposite Si-C obtenu par le procédé de l'invention.
La figure 2a) représente le spectre RAMAN de silicium micrométrique cristallisé (hors invention).
La figure 2b) représente le spectre RAMAN de silicium nanométrique cristallisé (hors invention).
La figure 2c) représente le spectre RAMAN de silicium nanométrique
   amorphe.
La figure 3 représente les courbes de cyclage d'un demi-accumulateur comprenant une matière active anodique constituée d'un nanocomposite Si_{1,6}-C₆ selon l'invention. Le pourcentage massique de carbone est de 62 % par rapport au poids du composite. La décharge est réalisée au courant de C/20.
La figure 4 représente les courbes de cyclage d'un demi-accumulateur comprenant une matière active anodique constituée d'un nanocomposite Si_{1,6}-C₆ selon l'invention. Le pourcentage massique de carbone est de 62 % par rapport au poids du composite. La décharge est réalisée au courant de C/10.
La figure 5 représente la variation de capacité d'un demi-accumulateur au cours d'un cyclage en C/10 et C/20.
La figure 6 représente les courbes de cyclage d'un accumulateur comprenant une matière active anodique selon l'invention et une cathode à base de LiCoO₂. La décharge est réalisée au courant de C/2 à 25°C.
La figure 7 représente les courbes de cyclage d'un accumulateur comprenant une matière active anodique selon l'invention et une cathode à base de LiCoO₂. La décharge est réalisée au courant de C/5 à 25°C.

### EXPOSE DETAILLE DE MODES DE REALISATION DE L'INVENTION

Le procédé de préparation du nanocomposite Si-C et la structure du nanocomposite Si-C vont maintenant être décrits en détail.

Le procédé de préparation du nanocomposite Si-C comprend :
a) la fabrication d'une poudre de silicium nanométrique amorphe,
b) le mélange de cette poudre avec un polymère carboné et
c) la pyrolyse du mélange, au cours de laquelle la recristallisation du silicium est incomplète et le silicium dans le nanocomposite obtenu est polymorphe.

Dans l'étape a), on fabrique la poudre de silicium nanométrique par la technique de dépôt chimique en phase vapeur assisté par plasma (PECVD) ou par laser CO₂. La technique de dépôt chimique en phase vapeur assisté par plasma (PECVD) consiste à introduire dans une enceinte un gaz à base de silicium, généralement SiH₄ (silane), sous très faible pression, de l'ordre de 1 µbar à 1 mbar, puis à décomposer ce gaz. Le silicium issu de la décomposition du gaz se dépose en couche mince sur un substrat et une grande partie de l'hydrogène est éliminée. La décomposition du gaz en plasma est obtenue sous l'effet d'une excitation telle qu'une décharge électrique continue, une décharge radio-fréquence, une décharge à très haute fréquence, ou des micro-ondes. D'autres modes d'excitation peuvent aussi être envisagés. Le silane peut aussi être introduit dans l'enceinte en mélange avec au moins un autre gaz choisi parmi l'hydrogène, l'hélium ou l'argon.

Cette technique permet, en modifiant les paramètres de synthèse, tels que la température du substrat, la géométrie du réacteur, la pression, la puissance de l'excitation, la vitesse de dépôt, le degré de dilution du silane, d'obtenir des particules de silicium présentant différents états de cristallisation, de morphologie et de taille.

On distingue trois états de cristallisation du silicium nanométrique:
- un état totalement amorphe,
- un état polymorphe dans lequel des particules de silicium cristallisées sont noyées dans une matrice de silicium amorphe, ou encore dans lequel des particules de silicium amorphe sont mélangées à des particules cristallisées. L'état polymorphe peut être obtenu lorsqu'on effectue un recuit contrôlé de silicium amorphe.
- un état cristallisé.

Selon l'invention, le silicium obtenu à l'étape a) est amorphe.

L'anode d'un accumulateur lithium-ion comprenant des particules amorphes de silicium présente de meilleures performances qu'une anode d'accumulateur lithium-ion comprenant des particules de silicium polymorphes ou cristallisées.

La méthode de synthèse de l'invention permet d'obtenir des particules de silicium de taille inférieure à 100 nm. D'autres méthodes de synthèse telles que la mécanosynthèse par exemple par broyage de silicium dans un moulin à billes, ne permettent pas d'obtenir des particules aussi petites qu'avec le procédé de l'invention. De préférence, la taille des particules de silicium n'excède pas 50 nm. De préférence encore, la taille des particules de silicium n'excède pas 30 nm. De préférence encore, la taille des particules de silicium n'excède pas 5 nm.

La microscopie électronique en transmission à haute résolution (METHR) permet de mesurer la taille des particules de silicium. Les figures la, 1b et 1c représentent des clichés par microscopie électronique en transmission de particules de silicium synthétisées selon l'invention. Ces figures montrent que la taille des particules de silicium est inférieure à 100 nm.

Cette technique permet également de connaître l'état de cristallisation du silicium nanométrique. Les figures 1d, le et 1f représentent les clichés réalisés par microscopie électronique en transmission à haute résolution d'échantillons de silicium amorphe (selon l'invention), polymorphe (hors invention) et cristallin (hors invention) respectivement.

La Figure 1f correspondant au silicium cristallin, montre des anneaux concentriques bien définis. La Figure 1d correspondant au silicium amorphe présente des anneaux concentriques de plus grand diamètre et dont la limite est mal définie.

La spectroscopie RAMAN est complémentaire à la microscopie électronique en transmission car elle permet de déterminer l'ordre de grandeur de la taille des particules d'un échantillon entier de silicium ainsi que son état de cristallisation alors que la microscopie électronique ne fournit ces caractéristiques que pour la portion de l'échantillon bombardée par les électrons.

Le spectre RAMAN du silicium comprend une bande dont la position et la forme sont fonctions de la taille et de l'état cristallin des particules de silicium.

La figure 2a représente le spectre RAMAN de silicium cristallin micrométrique (hors invention). Ce spectre présente une bande étroite à la fréquence de 520 cm⁻¹, dont la largeur à mi-hauteur est d'environ 7 cm⁻¹.

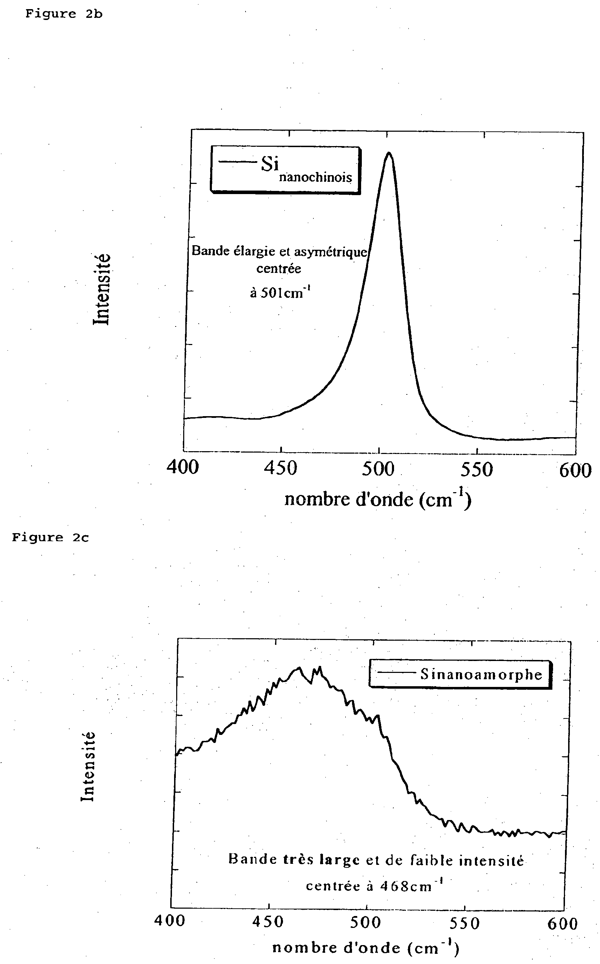

La figure 2b représente le spectre RAMAN de silicium cristallin nanométrique (hors invention). Ce spectre présente une bande à la fréquence de 500 cm⁻¹, dont la largeur à mi-hauteur est d'environ 22 cm⁻¹. La bande du spectre de la figure 2a se déplace vers une fréquence inférieure et s'élargit de manière asymétrique lorsque la taille des particules de silicium passe du domaine micrométrique au domaine nanométrique.

La Figure 2c représente le spectre RAMAN de silicium nanométrique amorphe. Ce spectre présente une bande à la fréquence de 469 cm⁻¹ dont la largeur à mi-hauteur est d'environ 100 cm⁻¹. La bande du spectre de la figure 2b se déplace vers une fréquence inférieure et s'élargit de manière asymétrique lorsque le silicium cristallin devient amorphe. La spectroscopie RAMAN permet donc de différencier le silicium micrométrique cristallin du silicium nanométrique amorphe.

La surface spécifique de la poudre de silicium nanométrique synthétisée est de 5 m²/g à 180 m²/g, ce qui est jusqu'à 30 fois supérieur aux poudres de silicium micrométriques. De préférence, la surface spécifique est de 5 m²/g à 80 m²/g.

Dans l'étape b) du procédé, la poudre nanométrique de silicium est mélangée à un polymère carboné, et un solvant est éventuellement ajouté au mélange afin de dissoudre le polymère carboné. La dissolution du polymère carboné, permet d'obtenir une bonne dispersion des particules de silicium nanométriques dans le polymère carboné et, après l'étape suivante de pyrolyse du mélange, une bonne dispersion des particules de silicium dans une matrice carbonée. Le solvant peut être choisi dans le groupe comprenant par exemple l'oxyde de propylène, l'acétone ou leur mélange. Le mélange ainsi réalisé est maintenu sous agitation mécanique à température ambiante jusqu'à évaporation du solvant.

Dans un mode préféré de réalisation, le polymère carboné est du polychlorure de vinyle (PVC) et le solvant organique est l'oxyde de propylène.

Dans un autre mode de réalisation de l'invention, la poudre nanométrique de silicium est mélangée à du PVC, à de l'oxyde de propylène et jusqu'à 20 % de graphite. Ce mode de réalisation permet une meilleure robustesse mécanique du composite pendant l'étape de fabrication de l'anode et une meilleure conductivité.

Dans un autre mode de réalisation de l'invention, la poudre nanométrique de silicium est mélangée à du PVC, à de l'oxyde de propylène et à des fibres de carbone..

La quantité de polymère est choisie de manière à ce que le pourcentage massique de carbone dans le nanocomposite final soit de 45 à 75 %. De préférence, le pourcentage massique de carbone dans le nanocomposite final est de 50 à 70 %. De préférence encore, le pourcentage massique de carbone dans le nanocomposite final est de 50 à 65 %. Lorsque le pourcentage massique de carbone dans le nanocomposite final est inférieur à 45 %, la tenue mécanique de l'électrode est insuffisante. Lorsque le pourcentage massique de carbone dans le nanocomposite final est supérieur à 75 %, la capacité massique de l'électrode obtenue est insuffisante.

Dans l'étape c) du procédé, on effectue la pyrolyse du mélange par cuisson à une température comprise entre 750°C et 1000°C sous atmosphère inerte, pendant 1 à 8 heures, avantageusement environ 4 heures. Dans le cas d'un polymère de PVC, on préfèrera une température de pyrolyse de 900°C. La taille des particules de silicium, noyées dans le carbone issu de la pyrolyse du polymère carboné, n'est pas modifiée au cours de la pyrolyse, comme le montre la Figure 1g. En effet, les particules de silicium gardent une taille inférieure à 100 nm.

La plage de température de pyrolyse est limitée de préférence à 1000°C afin d'éviter la formation de carbure de silicium SiC, néfaste au cyclage électrochimique. On ne détecte pas, par diffraction des rayons X, la présence de carbure de silicium sur un nanocomposite Si-C obtenu selon l'invention à 1000°C. Ceci signifie que dans l'hypothèse où du carbure de silicium est présent, il est soit amorphe, soit en quantité trop faible pour être détectée. La présence de carbure de silicium n'est pas non plus mise en évidence par spectroscopie RAMAN.

En revanche pour une température de pyrolyse de 1150°C, la présence de carbure de silicium peut être mise en évidence par diffraction des rayons X et spectroscopie de perte d'énergie des électrons (EELS).

Au cours de la pyrolyse, le silicium contenu dans le nanocomposite recristallise. Après pyrolyse, les particules de silicium qui étaient dans un état amorphe évoluent vers un état polymorphe ; celles qui étaient dans un état polymorphe évoluent vers un état cristallisé.

Selon l'invention, la recristallisation du silicium au cours de la pyrolyse est incomplète et le silicium dans le nanocomposite est polymorphe. Sans vouloir être liée par une théorie, la demanderesse pense que la première insertion électrochimique de lithium dans la structure cristalline du silicium s'accompagne d'une variation de volume de la maille cristalline. Cette variation est réduite lorsque le silicium n'est que partiellement cristallisé ou de préférence lorsqu'il est amorphe. On préfèrera donc obtenir une poudre de silicium et un nanocomposite Si-C dans un état de cristallisation le moins avancé, de façon à minimiser les variations de volume du silicium lors de l'insertion du lithium dans la structure du silicium.

L'étape de mélange des nanoparticules de silicium dans une solution d'un polymère carboné suivie de la pyrolyse de ce mélange permet d'obtenir une bonne dispersion des nanoparticules de silicium dans la masse carbonée. La mécanosynthèse ne permet pas d'obtenir une aussi bonne dispersion. La microscopie électronique à balayage à haute résolution permet de juger de la qualité de la dispersion.

Le nanocomposite Si-C ainsi préparé sert de matière active anodique d'un accumulateur au lithium.

L'anode comprend le nanocomposite Si-C, du noir de carbone et un liant.

Le noir de carbone sert à améliorer la conduction électrique de l'électrode ; il représente environ de 2 % à 25 % du poids de la matière active anodique.

Le liant peut être soluble en milieu aqueux et contenir par exemple un mélange de polymère de carboxyméthylcellulose (CMC) et d'un copolymère de butadiène - styrène (SBR), en une proportion totale allant de 2 à 20 % en poids de la matière active anodique. Le liant peut aussi être soluble en milieu organique et contenir par exemple du polyfluorure de vinylidène (PVDF) en une proportion allant de 2 à 20 % en poids de la matière active anodique.

La matière active cathodique peut être choisie parmi l'un ou plusieurs des matériaux des trois groupes suivants :
- le premier groupe comprend LiNiO₂, LiCoO₂, LiMnO₂. Ni, Co et Mn peuvent être substitués par l'un ou par plusieurs des éléments choisis dans le groupe comprenant Mg, Mn (sauf pour LiMnO₂), Al, B, Ti, V, Si, Cr, Fe, Cu, Zn, Zr.
- le second groupe comprend les oxydes mixtes de phosphore, de lithium, et d'au moins un métal de transition de formule générale LiₓM_{z}PO₄ où 0 ≤ x ≤ 3 et z = 1 ou 2. Des exemples de tels oxydes sont : LiMnPO₄, LiCoPO₄, LiFePO₄, LiVPO₄F et Li₃Fe₂PO₄.
- le troisième groupe comprend LiMn₂O₄, Mn pouvant être substitué par l'un ou par plusieurs des éléments choisis dans le groupe comprenant Ni, Co, Mg, Al, B, Ti, V, Si, Cr, Fe, Cu, Zn, Zr.

Les deuxième et troisième groupes comprennent aussi les matériaux adaptés à fonctionner à des tensions supérieures à 4,5 V par rapport à Li⁺/Li tels que, par exemple, ceux décrits dans la demande de brevet FR2831993.

L'électrolyte utilisé est un électrolyte classique dans l'art des accumulateurs au lithium. Le solvant est un mélange de solvants organiques choisis parmi les carbonates linéaires, les carbonates cycliques saturés, les carbonates cycliques insaturés, les esters linéaires. Les solvants peuvent être choisis dans le groupe comprenant le carbonate d'éthylène (EC), le carbonate de propylène (PC), le carbonate de diméthyle (DMC) et le carbonate de vinylidène (VC).

Un sel de lithium est dissous dans ce mélange de solvants. Il peut être choisi dans le groupe comprenant l'hexafluorophosphate de lithium (LiPF₆), le tétrafluoroborate de lithium (LiBF₄), l'hexafluoroarsénate de lithium (LiAsF₆), le perchlorate de lithium (LiClO₄), le lithium Bis oxalatoborate (LiBOB), le trifluorométhane sulfonimide de lithium LiN(CF₃SO₂)₂ (LiTFSI), le lithium bisperfluoroethylsulfonylimide (LiBETI), le lithium trifluorométhanesulfoneméthide LiC(CF₃SO₂)₃ (LiTFSM).

La concentration de ce sel dans le mélange de solvants est variable, par exemple entre 0,5 et 1,5 fois molaire dans le solvant, de préférence une fois molaire. L'invention n'est pas limitée aux accumulateurs lithium-ion ; elle s'applique également aux accumulateurs lithium-polymère.

### EXEMPLES

Des tests ont été effectués :
1) d'une part sur un demi-accumulateur comprenant :
   - une anode comprenant un nanocomposite Si-C selon l'invention
   - une contre-électrode et une électrode de référence en lithium métallique,
2) d'autre part sur un accumulateur comprenant :
   - une anode comprenant un nanocomposite Si-C selon l'invention,
   - une cathode à base de LiCoO₂.

### 1) Tests sur un demi-accumulateur :

Du silicium nanoamorphe est préparé dans les conditions suivantes. Un mélange de silane et d'argon est introduit sous une pression de 6,6.10⁻⁴ bar dans l'enceinte de réaction. La température du substrat est d'environ 250°C. La puissance de la décharge radio-fréquence est d'environ 10 à 20 W. La poudre de silicium recueillie sur le substrat est ensuite mélangée à une quantité suffisante de PVC pour obtenir un nanocomposite Si_{1,6}-C₆ contenant 62% en poids de carbone. Le mélange est chauffé à 900°C. Le nanocomposite ainsi obtenu est utilisé dans la fabrication d'une anode. Cette anode est assemblée avec une contre-électrode et une électrode de référencé en lithium métallique de façon à former un demi-accumulateur.

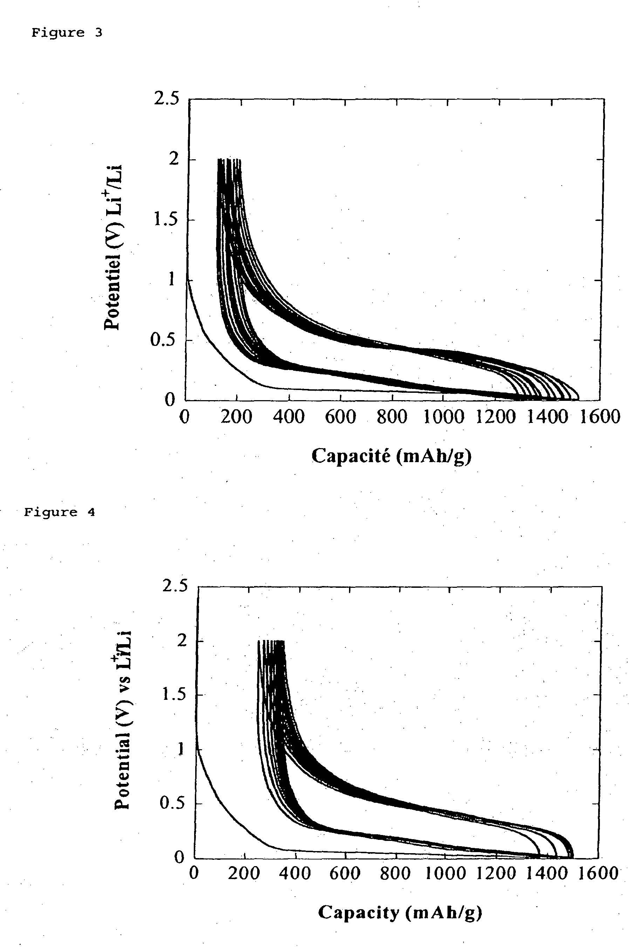

Le demi-accumulateur est testé au cours de cycles de charge-décharge à 25°C. Le courant de décharge est de C/20 et de C/10, C représentant le régime de charge de l'accumulateur en une heure. Les Figures 3 et 4, représentent les résultats des essais de cyclage pour une décharge au courant de C/20 et C/10, respectivement. La capacité déchargée est mesurée à l'aide d'un coulomètre.

Les Figures 3 et 4 indiquent que la capacité déchargée est comprise entre 1200 et 1400 mAh/g.

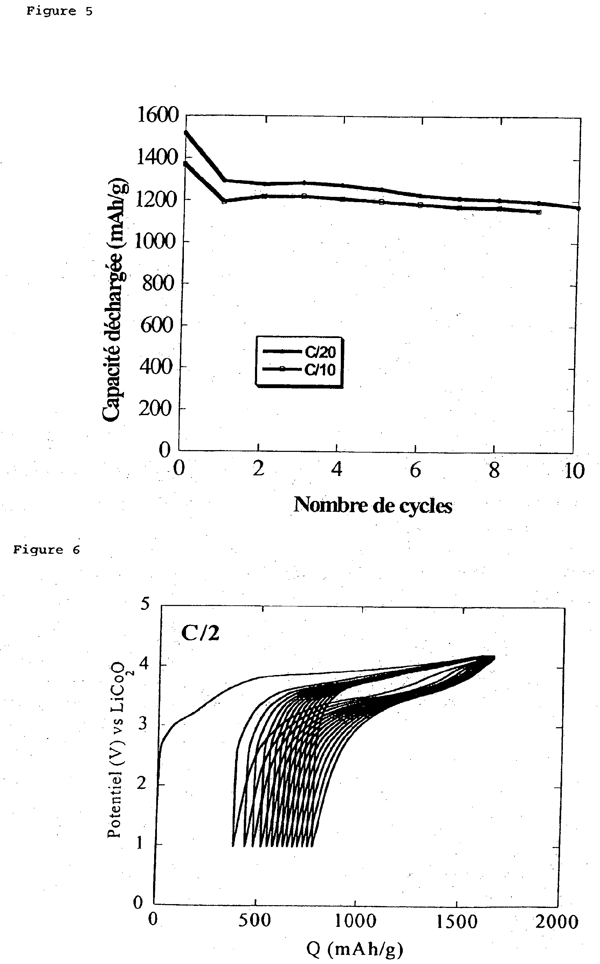

La Figure 5 indique une capacité stable du demi-accumulateur en cyclage, ce qui prouve que le nanocomposite de l'invention est stable mécaniquement. L'insertion du lithium dans les particules de silicium noyées dans la masse de carbone, s'effectue de manière réversible, avec une faible variation de volume de l'alliage LiₓSi. La présence de la matrice de carbone autour des particules de silicium permet de maintenir le contact électrique et d'assurer la cohésion du matériau. La durée du cyclage, correspondant à une perte de capacité de 10%, est d'au moins cent cycles. On peut accroître la stabilité mécanique du nanocomposite en augmentant la quantité de carbone dans le nanocomposite.

### 2) Tests sur un accumulateur :

Un nanocomposite selon l'invention, contenant 67% en poids de carbone, est synthétisé. Il est ensuite utilisé dans la fabrication d'une anode constituée de :
- 82 % de ce nanocomposite,
- 4,5 % de PVDF,
- 13,5 % de carbone (KetjenBlack)

On superpose à cette anode, un séparateur et une cathode à base de LiCoO₂ afin de former l'accumulateur.

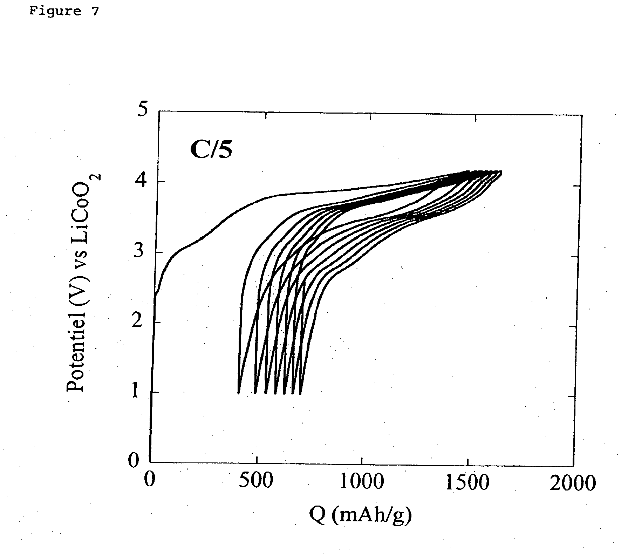

L'accumulateur est testé au cours de cycles de charge-décharge à 25°C. Les Figures 6 et 7, représentent les résultats des essais de cyclage pour une décharge aux courants de C/2 et C/5, respectivement. On constate que la capacité déchargée est supérieure à 1000 mAh/g. L'accumulateur comprenant une anode selon l'invention présente donc un accroissement de capacité par rapport aux accumulateurs lithium-ion comprenant un matériau anodique de l'art antérieur.

Le Tableau 1 ci-dessous compare les capacités massiques et les énergies massiques et volumiques du matériau anodique de l'accumulateur selon l'invention avec celles de matériaux anodiques connus de l'art antérieur. Pour plus de simplicité, ces calculs comparatifs ont été réalisées en considérant un simple empilement « stack » de 0,5 mm d'épaisseur, d'une anode, d'un séparateur et d'une cathode. On obtient ainsi une évaluation directe du gain d'énergie en remplaçant l'anode en carbone par une anode comprenant le nanocomposite Si-C selon l'invention. Un tel calcul ne tient pas compte du design mécanique de l'accumulateur.

Le nanocomposite Si-C selon l'invention permet d'obtenir une capacité massique quatre fois supérieure à celle d'une anode de carbone. Il permet aussi d'augmenter les énergies massiques et/ou volumiques de 20 % et 30 % respectivement par rapport à l'utilisation d'une anode classique de carbone.

Le nanocomposite selon l'invention présente également l'avantage de fournir un rendement électrochimique élevé d'environ 90% au premier cycle. Le rendement électrochimique étant défini comme le rapport entre la quantité d'électricité déchargée par l'accumulateur et la quantité d'électricité chargée dans l'accumulateur avant cette décharge.

**Tableau 1**

| Anode/ Cathode/ Tension de fonctionnement de la cathode par rapport au potentiel Li⁺/Li | Si-C Capacités (mAh/g) | Energie massique calculée (Wh/kg) | Energie volumique calculée (Wh/l) | Tension moyenne de l'accumulateur |
|---|---|---|---|---|
| C / LiCoO₂ / 4,2 V | - | 201 | 505 | 3,7 V |
| C / LiMn_{1.5}Ni_{0.5}O₄/5 V | - | 235 | 573 | 4,5 V |
| Si-C microstructuré / LiCoO₂ / 4,2V | 1 100/850 | 205 | 580 | 3,4 V |
| Si-C microstructuré / LiMn_{1,5}Ni_{0,5}O₄ / 5 V | 1100/850 | 240 | 685 | 4,2 V |
| Si-C nanostructuré / LiCoO₂/4,2 V | 1400/1200 | 245 | 645 | 3,4 V |
| Si-C nanostructuré/ LiMn_{1,5}Ni_{0,5}O₄ / 5 V | 1400/1200 | 280 | 760 | 4,2 V |

Le présent mode de réalisation et les figures doivent être considérés comme ayant été présentés à titre illustratif et non restrictif, et l'invention n'est pas censée être limitée aux détails fournis ici mais peut être modifiée en restant dans le cadre de la portée des revendications annexées.

## Revendications

1. Procédé de fabrication d'un matériau nanocomposite Si-C comprenant:
a) la fourniture d'une poudre de silicium amorphe obtenue par la technique de dépôt chimique en phase vapeur assisté par plasma (PECVD) ou par laser CO₂, la taille des particules de silicium étant inférieure à 100 nm ;
b) le mélange de la poudre de silicium à un polymère carboné ; et
c) la pyrolyse du mélange, au cours de laquelle la recristallisation du silicium est incomplète et le silicium dans le nanocomposite obtenu est polymorphe.

2. Procédé selon la revendication 1, dans lequel on ajoute au mélange de l'étape b) un solvant adapté à dissoudre le polymère carboné, puis on maintient le mélange sous agitation mécanique jusqu'à évaporation du solvant.

3. Procédé selon la revendication 2, dans lequel le solvant est l'oxyde de propylène.

4. Procédé selon l'une des revendications précédentes, dans lequel le polymère carboné est le PVC.

5. Procédé selon la revendication 4, dans lequel la pyrolyse s'effectue à une température comprise entre 750°C et 1000°C, de préférence à 900°C.

6. Procédé selon les revendications 1 à 5, dans lequel le pourcentage massique de carbone dans le matériau nanocomposite est de 45 à 75 %, de préférence de 50 à 70 % et de préférence encore de 50 à 65%.

7. Procédé selon l'une des revendications précédentes, dans lequel l'étape b) comprend de plus, l'addition de carbone, jusqu'à 20% par rapport au poids du matériau nanocomposite.

8. Procédé selon la revendication 7, dans lequel le carbone est du graphite ou est sous forme de fibres.

9. Matériau nanocomposite Si-C susceptible d'être obtenu par le procédé selon l'une quelconque des revendications 1 à 8.

10. Matériau nanocomposite Si-C selon la revendication 9, ayant une capacité massique supérieure ou égale à 1200 mAh/g, mesurée à 25°C, pour un courant de décharge inférieur ou égal à C, C représentant le régime de charge en une heure d'un accumulateur au lithium comprenant au moins une anode comprenant ledit matériau nanocomposite.

11. Matériau nanocomposite Si-C selon l'une des revendications 9 à 10, dans lequel la taille des particules de silicium dans le matériau nanocomposite, est inférieure à 50 nm, de préférence inférieure à 30 nm et de préférence encore, inférieure à 5 nm.

12. Matériau nanocomposite Si-C selon l'une des revendications 9 à 11, obtenu à partir de silicium, dont la surface spécifique, à l'étape a), est de 5 à 180 m²/g, de préférence de 5 à 80 m²/g.

13. Matériau nanocomposite Si-C selon l'une des revendications 9 à 12, dans lequel le pourcentage massique de carbone dans le nanocomposite est de 45 à 75 %, de préférence de 50 à 70 %, de préférence encore de 50 à 65 %.

14. Matériau nanocomposite selon l'une des revendications 9 à 13, ayant pour composition atomique Si_{1,6}-C₆.

15. Accumulateur au lithium comprenant au moins une anode comprenant un matériau nanocomposite selon l'une des revendications 9 à 14.

## Patentansprüche

1. Verfahren zur Herstellung eines Nanoverbundmaterials Si-C, umfassend:
a) die Bereitstellung eines amorphen Siliziumpulvers, das durch CO₂-Laser oder Plasma (PECVD) unterstützte, chemische Gasphasenabscheidungstechnik erhalten wird, wobei die Siliziumteilchengröße kleiner als 100 nm ist;
b) die Mischung des Siliziumpulvers mit einem kohlenstoffhaltigen Polymer; und
c) die Pyrolisierung des Gemisches, in deren Verlauf die Umkristallisation des Siliziums unvollständig ist, und das Silizium im erhaltenen Nanoverbundmaterial polymorph ist.

2. Verfahren nach Anspruch 1, wobei dem Gemisch von Schritt b) ein, für die Auflösung des kohlenstoffhaltigen Polymers geeignetes Lösungsmittel hinzugefügt wird, und das Gemisch dann bis zur Verdampfung des Lösungsmittels mechanisch gerührt wird.

3. Verfahren nach Anspruch 2, wobei das kohlenstoffhaltige Polymer Propylenoxid ist.

4. Verfahren nach einem der vorhergehenden Ansprüche, wobei das kohlenstoffhaltige Polymer PVC ist.

5. Verfahren nach Anspruch 4, wobei die Pyrolyse bei einer Temperatur zwischen 750 °C und 1000 °C, vorzugsweise bei 900 °C durchgeführt wird.

6. Verfahren nach einem der Ansprüche 1 bis 5, wobei der Massenprozentsatz von Kohlenstoff im Nanoverbundmaterial im Bereich von 45 bis 75%, vorzugsweise von 50 bis 70% und noch bevorzugter von 50 bis 65% liegt.

7. Verfahren nach einem der vorhergehenden Ansprüche, wobei Schritt b) ferner den Zusatz von Kohlenstoff, bis zu 20 Gewichts-% in Bezug auf das Gewicht des Nanoverbundmaterials umfasst.

8. Verfahren nach Anspruch 7, wobei der Kohlenstoff ein Graphit ist oder in Faserform vorliegt.

9. Nanoverbundmaterial Si-C, das durch das Verfahren nach einem der Ansprüche 1 bis 8 erhalten werden kann.

10. Nanoverbundmaterial Si-C nach Anspruch 9, das, bei 25 °C gemessen, eine Massenkapazität von über oder gleich 1200 mAh/g aufweist, für einen Entladestrom der kleiner oder gleich C ist, wobei C die einstündige Laderate eines Lithium-Akkumulators darstellt, umfassend mindestens eine Anode, die das Nanoverbundmaterial umfasst.

11. Nanoverbundmaterial Si-C nach einem der Ansprüche 9 bis 10, wobei die Siliziumteilchengröße im Nanoverbundmaterial kleiner als 50 nm, vorzugsweise kleiner als 30 nm und noch bevorzugter kleiner als 5 nm ist.

12. Nanoverbundmaterial Si-C nach einem der Ansprüche 9 bis 11, erhalten aus Silizium, dessen spezifische Oberfläche, bei Schritt a) im Bereich von 5 bis 180 m²/g, vorzugsweise von 5 bis 80 m²/g liegt.

13. Nanoverbundmaterial Si-C nach einem der Ansprüche 9 bis 12, wobei der Massenprozentsatz von Kohlenstoff im Nanoverbundmaterial im Bereich von 45 bis 75%, vorzugsweise von 50 bis 70%, noch bevorzugter von 50 bis 65% liegt.

14. Nanoverbundmaterial nach einem der Ansprüche 9 bis 13, welches als atomare Zusammensetzung Si_{1,6}-C₆ aufweist.

15. Lithium-Akkumulator umfassend mindestens eine Anode, die nach einem der Ansprüche 9 bis 14 ein Nanoverbundmaterial umfasst.

## Claims

1. Method for the manufacture of an Si-C nanocomposite material comprising the steps consisting of:
a) providing an amorphous silicon powder obtained by the plasma-enhanced chemical vapour deposition (PECVD) technique or by CO₂ laser, the size of the silicon particles being less than 100 nm;
b) mixing the silicon powder with a carbon-containing polymer, and
c) carrying out the pyrolysis of the mixture, during which recrystallisation of the silicon is incomplete and silicon in the obtained nanocomposite is in a polymorphous state.

2. Method according to claim 1, in which a solvent suitable for dissolving the carbon-containing polymer is added to the mixture of step b), then the mixture is maintained under mechanical stirring until the evaporation of the solvent.

3. Method according to claim 2, in which the solvent is propylene oxide.

4. Method according to one of the preceding claims, in which the carbon-containing polymer is PVC.

5. Method according to claim 4, in which the pyrolysis is carried out at a temperature comprised between 750°C and 1000°C, preferably at 900°C.

6. Method according to claims 1 to 5, in which the mass percentage of carbon in the nanocomposite material is from 45 to 75%, preferably from 50 to 70% and still more preferably from 50 to 65%.

7. Method according to one of the preceding claims, in which step b) also includes the addition of carbon, up to 20% relative to the weight of the nanocomposite material.

8. Method according to claim 7, in which the carbon is graphite or is in the form of fibres.

9. Si-C nanocomposite material obtainable by the method according to one of claims 1 to 8.

10. Si-C nanocomposite material according to claim 9, having a mass capacity greater than or equal to 1200 mAh/g, measured at 25°C, for a discharge current less than or equal to C, C being the charge rate in one hour of a lithium cell comprising at least one anode comprising said nanocomposite.

11. Si-C nanocomposite material according to one of claims 9 to 10, in which the size of the silicon particles in the nanocomposite material is less than 50 nm, preferably less than 30 nm, more preferably less than 5 nm.

12. Si-C nanocomposite material according to one of claims 9 to 11, obtained from silicon whose specific surface area, in step a), is from 5 to 180 m²/g, preferably from 5 to 80 m²/g.

13. Si-C nanocomposite material according to one of claims 9 to 12, in which a mass percentage of carbon in the nanocomposite is from 45 to 75%, preferably from 50 to 70%, more preferably from 50 to 65%.

14. Si-C nanocomposite material according to one of claims 9 to 13, having an atomic composition of Si_{1.6}-C₆.

15. Lithium cell comprising at least one anode containing a nanocomposite material according to one of claims 9 to 14.
